# EUROPÄISCHE PATENTANMELDUNG

(11) **EP 2 816 372 A2**
(43) Veröffentlichungstag der Anmeldung: **24.12.2014**
(21) Anmeldenummer: 14163086.3
(22) Anmeldetag: 01.04.2014
(51) Int. Cl.: G01S 15/93, G01S 7/521, G10K 11/00

(54) **Abstandssensor für ein Kraftfahrzeug und Anordnung mehrerer Abstandssensoren**

(30) Priorität: 18.06.2013 DE 102013211409
(71) Anmelder: ROBERT BOSCH GMBH, 70442 Stuttgart (DE)
(72) Erfinder: Braeuer, Toni, 71638 Ludwigsbrug (DE); Przybyla, Benjamin, 71701 Schwieberdingen (DE)

(57) **Zusammenfassung**

Die Erfindung betrifft einen Abstandssensor (10) für ein Kraftfahrzeug, dessen Gehäuse (12) dazu ausgebildet ist, an einem Stoßfänger (1) des Kraftfahrzeugs befestigt zu werden. Erfindungsgemäß ist es vorgesehen, dass das Gehäuse (12) gleichzeitig zur Aufnahme oder Befestigung eines Crash- bzw. Beschleunigungssensors (30) einer Airbageinrichtung ausgebildet ist.

## Beschreibung

### Stand der Technik

Die Erfindung betrifft einen Abstandssensor für ein Kraftfahrzeug nach dem Oberbegriff des Anspruchs 1. Ferner betrifft die Erfindung eine Anordnung mehrerer Abstandssensoren in einem Stoßfänger eines Kraftfahrzeugs.

Ein Abstandssensor nach dem Oberbegriff des Anspruchs 1 ist aus der DE 10 2011 105 013 A1 bekannt. Der als Ultraschallsensor ausgebildete Abstandssensor ist über eine Halteeinrichtung an einem Stoßfänger des Kraftfahrzeugs befestigt und dient dazu, insbesondere beim Einparkvorgang den Abstand zu in Senderichtung des Abstandssensors angeordneten Objekten zu detektieren. Hierzu ist das Gehäuse des Abstandssensors üblicherweise über eine Rastverbindung an der an der Innenseite des Stoßfängers angeordneten bzw. integrierten Halteeinrichtung für den Abstandssensor befestigt.

Darüber hinaus ist beispielsweise aus der DE 10 2011 114 297 A1 eine Sicherheitsvorrichtung für ein Kraftfahrzeug in Form einer Airbageinrichtung bekannt, die mehrere Crashsensoren, insbesondere Beschleunigungssensoren aufweist, um einen Crash des Fahrzeugs detektieren zu können, damit ein bzw. mehrere Airbags in dem Kraftfahrzeug bedarfsgerecht ausgelöst werden können. Üblicherweise befindet sich wenigstens einer der Beschleunigungssensoren im Bereich des Stoßfängers, insbesondere an der Innenseite des Stoßfängers, so dass beispielsweise keine Öffnungen in dem Stoßfänger, wie bei den eingangs erwähnten Abstandssensoren üblich, vorgesehen sein müssen. Nichtsdestotrotz benötigen derartige Beschleunigungssensoren zur Befestigung im Bereich des Stoßfängers ebenfalls eine Halteeinrichtung an dem Stoßfänger.

Bei Kraftfahrzeugen, in deren Stoßfängerbereich sich sowohl Abstandssensoren, als auch Beschleunigungssensoren für Airbageinrichtungen befinden, ist es erforderlich, jeden der Sensoren über den Kabelbaum des Kraftfahrzeugs elektrisch zu kontaktieren. Jeder der Sensoren (Abstandssensor und Beschleunigungssensor) benötigt daher wenigstens einen am Kabelbaum befestigten Steckeranschluss.

### Offenbarung der Erfindung

Ausgehend von dem dargestellten Stand der Technik liegt der Erfindung die Aufgabe zugrunde, eine vereinfachte Anordnung von Sensoren im Stoßfängerbereich eines Kraftfahrzeugs vorzuschlagen, wobei das Kraftfahrzeug sowohl Abstandssensoren, als auch Beschleunigungssensoren für eine Airbageinrichtung aufweist.

Diese Aufgabe wird erfindungsgemäß bei einem Abstandssensor für ein Kraftfahrzeug mit den Merkmalen des Anspruchs 1 dadurch gelöst, dass das Gehäuse des Abstandssensors gleichzeitig zur Aufnahme oder Befestigung eines Crash- bzw. Beschleunigungssensors der Airbageinrichtung ausgebildet ist. Eine derartige Anordnung, bei der der Beschleunigungs- bzw. Crashsensor der Airbageinrichtung unmittelbar entweder in dem Gehäuse des Abstandssensors angeordnet oder zumindest an diesem befestigt ist, ermöglicht es, auf eine zusätzliche, separate Befestigung des Beschleunigungssensors im Bereich des Stoßfängers verzichten zu können. Dadurch werden der konstruktive Aufwand am Stoßfänger sowie dessen Herstellkosten verringert und zusätzlicher Bauraum dort geschaffen, wo ansonsten der Beschleunigungs- bzw. Crashsensor angeordnet ist. Darüber hinaus hat eine konstruktive Ausbildung, bei der der Beschleunigungssensor innerhalb des Gehäuses des Abstandsensors aufgenommen ist, den besonderen Vorteil, dass gegebenenfalls auf zusätzliche (mechanische) Schutzmaßnahmen bzw. konstruktive Ausbildungen, die bei einer Anordnung des Beschleunigungssensors beispielsweise an der Außenseite des Gehäuses des Abstandssensors oder, wie beim Stand der Technik üblich, an der Innenseite des Stoßfängers erforderlich sind, verzichtet werden kann. Dadurch lassen sich zusätzliche Kostenvorteile bei der Herstellung des Beschleunigungssensors erzielen.

Vorteilhafte Weiterbildungen des erfindungsgemäßen Abstandssensors für ein Kraftfahrzeug sind in den Unteransprüchen aufgeführt.

In konstruktiv bevorzugter Ausgestaltung zur bauraum- und kostenoptimierten Fertigung ist es besonders vorteilhaft, wenn innerhalb des Gehäuses ein Schaltungsträger in Form einer Leiterplatte angeordnet ist, die zumindest mittelbar mit einem Steckeranschluss gekoppelt ist, und wenn der Beschleunigungssensor innerhalb des Gehäuses angeordnet und mit dem Schaltungsträger elektrisch verbunden ist. Mit anderen Worten gesagt bedeutet dies, dass der Schaltungsträger (Leiterplatte) gleichzeitig der elektrischen Kontaktierung sowohl des Abstandssensors als auch des Beschleunigungssensors mit dem Kabelbaum über den Steckeranschluss erfolgt. Die elektrische Kontaktierung beider Sensoren erfolgt somit über einen einzigen Steckeranschluss am Kabelbaum, was die Kosten des Kabelbaums reduziert.

In Weiterbildung des zuletzt angeführten Erfindungsgedankens wird vorgeschlagen, dass der Beschleunigungssensor elektrische Anschlüsse aufweist, die unmittelbar mit auf dem Schaltungsträger angeordneten Gegenkontakten verbunden sind, insbesondere durcheine Lötverbindung. Es ist somit kein zusätzlicher Verkabelungsaufwand erforderlich, der die elektrischen Anschlüsse des Beschleunigungssensors mit dem Schaltungsträger herstellt.

Aus Gründen der Raumökonomie sowie der üblicherweise standardmäßig vorhandenen Halteeinrichtungen für die Abstandssensoren wird darüber hinaus vorgeschlagen, dass der Beschleunigungssensor auf der einer Sensormembran abgewandten Seite des Schaltungsträgers angeordnet ist. Dadurch wird in Richtung zum Stoßfänger ein Abstandssensor ermöglicht, der gegenüber Abstandssensoren, die nach dem Stand der Technik ohne integrierte Beschleunigungssensoren ausgebildet sind, keinen vergrößerten Bauraum benötigen, so dass Standardbefestigungen für den Abstandssensor verwendet werden können.

Die Erfindung umfasst auch eine Anordnung mehrerer Abstandssensoren in einem Stoßfänger eines Kraftfahrzeugs, wobei wenigstens ein Abstandssensor auf erfindungsgemäße Art und Weise ausgebildet ist.

Üblicherweise werden für Airbagauslöseeinrichtungen mehrere Crash- bzw. Beschleunigungssensoren verwendet, wobei durch die Auswertung der Signale der mehreren Sensoren beispielsweise beim Auftreten eines Fehlsignals bei einem der Sensoren eine Fehlauslösung von Airbags vermieden werden kann. Darüber hinaus ist insbesondere beim Vorhandensein mehrerer Airbags, beispielsweise eines Fahrerairbags und eines Beifahrerairbags wichtig zu wissen, ob beispielsweise bei einem Frontalcrash dieser über die gesamte Vorderseite des Kraftfahrzeugs erfolgt, oder nur in teilweiser Überdeckung, beispielsweise auf der Fahrerseite. Dadurch kann gegebenenfalls die Auslösung des Airbags auf der Fahrer- und Beifahrerseite auf unterschiedliche Art und Weise zur Optimierung des Insassenschutzes erfolgen. Um derartige Erkenntnisse über den Ort eines Crashs zu ermöglichen, ist es in einer bevorzugter Ausgestaltung der Anordnung vorgesehen, dass wenigstens zwei erfindungsgemäße Abstandssensoren vorgesehen sind, und dass beim Vorhandensein von insgesamt wenigstens drei Abstandssensoren zwischen den wenigstens zwei erfindungsgemäßen Abstandssensoren wenigstens ein Abstandssensor ohne integrierten Beschleunigungssensor angeordnet ist. Eine derartige Anordnung ermöglicht es, zwischen den mit den Beschleunigungssensoren versehenen Abstandssensoren einen gewissen Abstand quer zur Fahrtrichtung des Kraftfahrzeugs auszubilden, so dass aus den entsprechenden Signalen der Beschleunigungssensoren auf den Ort bzw. den Grad der Überdeckung bei einem Crash geschlossen werden kann.

In Weiterbildung dieses Erfindungsgedankens ist es insbesondere vorgesehen, dass jeweils ein erfindungsgemäßer Abstandssensor in einem Randbereich des Stoßfängers angeordnet ist, der in bzw. entgegen der Fahrtrichtung des Fahrzeugs ausgerichtet ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: in vereinfachter Darstellung einen Stoßfänger mit mehreren Abstandssensoren,

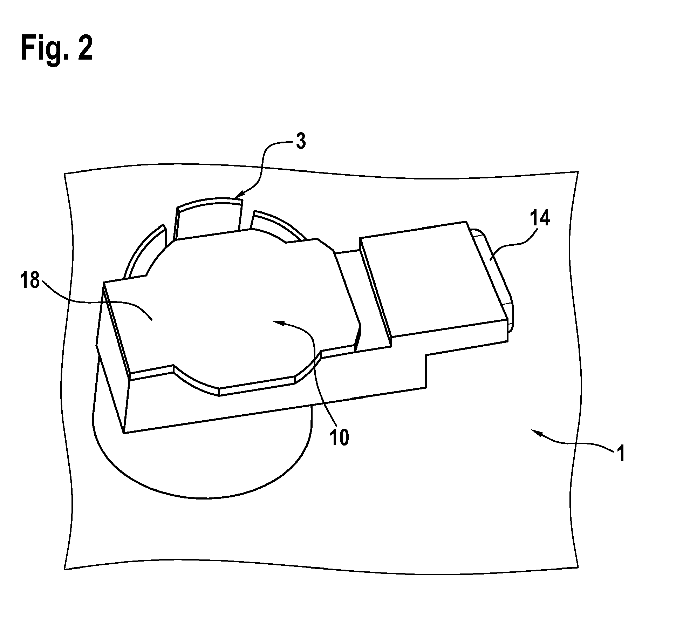

- Fig. 2: einen erfindungsgemäßen Abstandssensor, wie er an der Innenseite des Stoßfängers gemäß Fig. 1 befestigt ist, in perspektivischer Ansicht,
- Fig. 3: einen Längsschnitt durch den Abstandssensor gemäß Fig. 2 und
- Fig. 4: eine Explosionsdarstellung des Abstandssensors nach Fig. 3.

Gleiche Elemente bzw. Elemente mit gleicher Funktion sind in den Figuren mit den gleichen Bezugszeichen versehen.

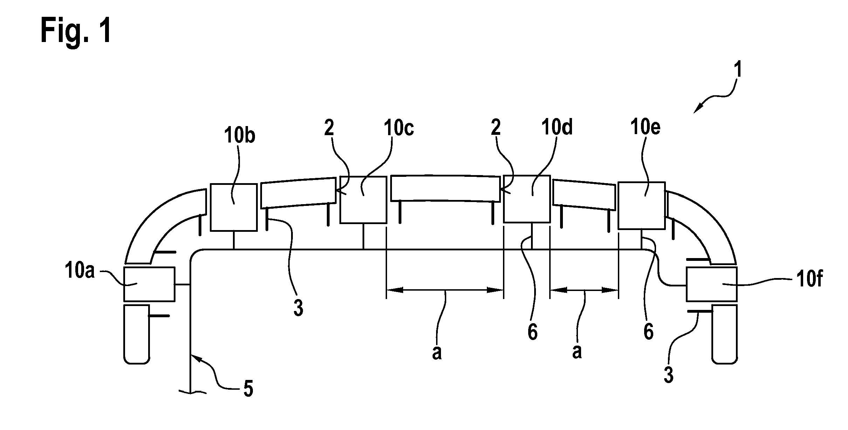

In der Fig. 1 ist der in Fahrtrichtung eines nicht dargestellten Kraftfahrzeugs vordere Stoßfänger 1 dargestellt. In dem Stoßfänger 1 sind insgesamt sechs Durchgangsöffnungen 2 zur Aufnahme jeweils eines Abstandssensors 10a bis 10f ausgebildet. Während die Abstandssensoren 10a und 10f jeweils in einem Bereich des Stoßfängers 1 angeordnet ist, der in etwa mit der jeweiligen Fahrzeuglängsseite ausgerichtet ist, befinden sich die vier Abstandssensoren 10b bis 10e in Fahrtrichtung des Fahrzeugs bzw. in Ausrichtung mit der Frontseite des Kraftfahrzeugs. Die vier Abstandssensoren 10b bis 10e weisen jeweils einen Abstand a zueinander auf, der in etwa gleich groß ausgebildet ist. Die Abstandssensoren 10a bis 10f werden von der Innenseite des Stoßfängers 1 her mit dem Stoßfänger 1 durch lediglich angedeutete Befestigungseinrichtungen 3 in Form von Halteringen verbunden, wobei die Befestigungseinrichtungen 3 insbesondere derart ausgebildet ist, dass zwischen der Befestigungseinrichtung 3 und dem jeweiligen Abstandssensors 10a bis 10f eine Rastverbindung ausgebildet ist.

Die elektrische Kontaktierung der Abstandssensoren 10a bis 10f erfolgt über einen Kabelbaum 5 des Kraftfahrzeugs, von dem ein Abzweig 6 mit einem nicht dargestellten Steckeranschluss zu dem jeweiligen Abstandssensor 10a bis 10f führt. Die Abstandssensoren 10a bis 10f sind insbesondere als Ultraschall-Abstandssensoren 10a bis 10f ausgebildet, um den Abstand zu einem im Sendebereich des Abstandssensors 10a bis 10f befindlichen Objekt zu detektieren und über den Kabelbaum 5, über den auch die elektrische Kontaktierung bzw. Stromversorgung des Abstandssensors 10a bis 10f erfolgt, einem entsprechenden Steuergerät als elektrisches Signal zuzuführen.

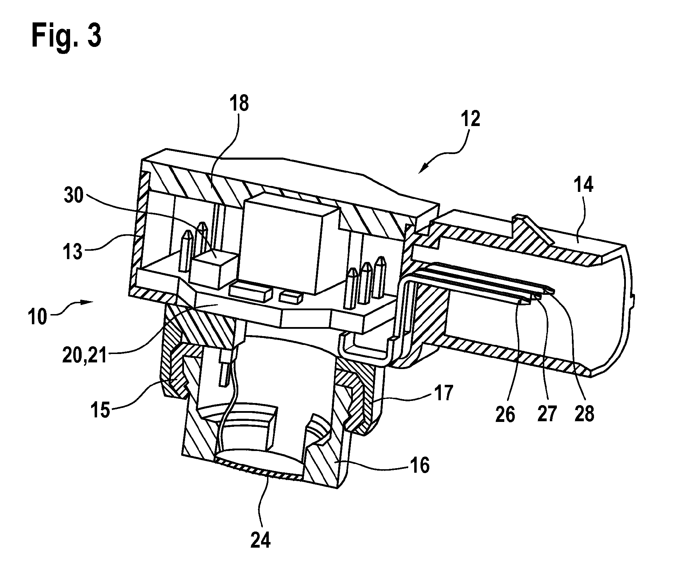

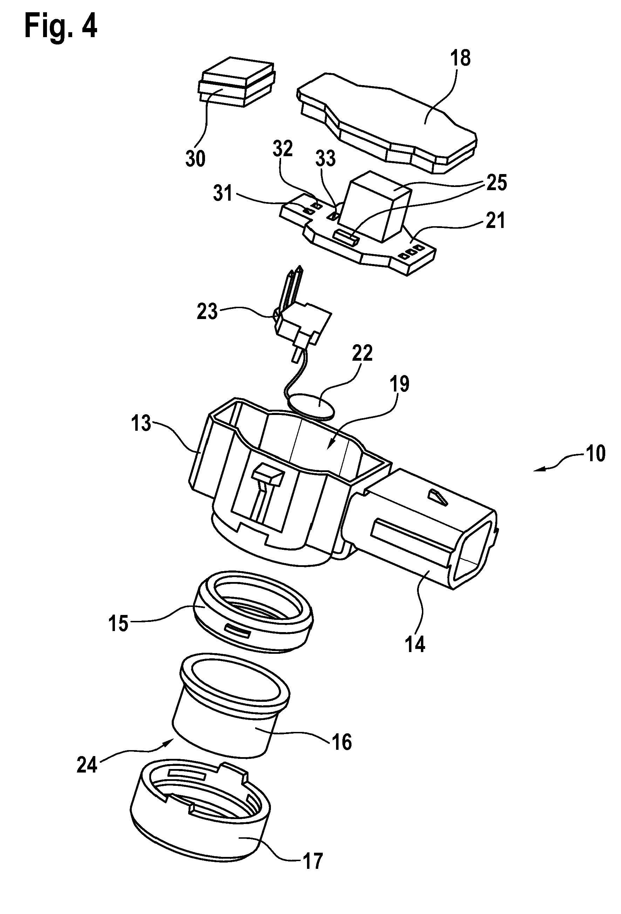

Erfindungsgemäß ist es vorgesehen, dass wenigstens einer der Abstandssensoren 10b bis 10e, im Nachfolgenden lediglich als Abstandssensor 10 bezeichnet, entsprechend der Fig. 3 und 4 ausgebildet ist. Der erfindungsgemäße Abstandssensor 10 umfasst entsprechend der Darstellung der Fig. 3 und 4 ein mehrteilig ausgebildetes Gehäuse 12, das einen Gehäusegrundkörper 13 mit einem Steckeranschluss 14 umfasst, über den die elektrische Kontaktierung des Abstandssensors 10 mit dem Kabelbaum 5 erfolgt. Auf der dem Stoßfänger 1 zugewandten Seite des Gehäuses 12 schließt sich an den Gehäusegrundkörper 13, wie aus dem Stand der Technik an sich bekannt, ein Entkopplungsring 15 und eine im Ausführungsbeispiel topfförmig ausgebildetes Element 16 mit der darin befindlichen Sensormembran 24 an, wobei das Element 16 zumindest bereichsweise innerhalb einer Haltehülse 17 aufgenommen ist. Auf der der Haltehülse 17 abgewandten Seite des Gehäusegrundkörpers 13 ist der Gehäusegrundkörper 13 von einem Gehäusedeckel 18, insbesondere mittels einer Rastverbindung, verschlossen.

Innerhalb des Innenraums 19 des Gehäuses 12 des Abstandssensors 10 ist ein Schaltungsträger 20 zur Aufnahme elektrischer bzw. elektronischer Bauteile in Form einer Leiterplatte 21 angeordnet. Der Schaltungsträger 20 bzw. die Leiterplatte 21 ist einerseits mit einem mit der Sensormembran 24 gekoppelten Piezoelement 22 über einen Anschlusssteckerkörper 23 verbunden, und weist andererseits elektrische bzw. elektronische Bauelemente 25 zur Auswertung der von dem Piezoelement 22 bzw. der Sensormembran 24 empfangenen Signale auf. Die Leiterplatte 21 ist entsprechend der Darstellung der Fig. 3 über gebogene Steckeranschlussfahnen 26 bis 28, die zum Steckeranschluss 14 des Gehäusekörpers 13 führen, mit dem Kabelbaum 5 elektrisch kontaktiert.

Auf einem Teilbereich der Leiterplatte 21 ist ein Crashsensor einer Airbageinrichtung in Form eines Beschleunigungssensors 30 angeordnet. Die Anordnung des Beschleunigungssensors 30 ist auf der der Sensormembran 24 abgewandten Seite der Leiterplatte 21. Der Beschleunigungssensor 30 weist auf der der Leiterplatte 21 zugewandten Seite in den Figuren nicht dargestellte elektrische Anschlüsse auf, die dazu ausgebildet und angeordnet sind, mit auf der Leiterplatte 21 angeordneten Gegenkontakten 31 bis 33 elektrisch kontaktiert zu werden, insbesondere mittels einer Lötverbindung. Vorzugsweise umfasst der Beschleunigungssensor 30, der über den Kabelbaum 5 mit einem nicht dargestellten Airbagsteuergerät verbunden ist, sämtliche zur Erfassung und Auswertung von Beschleunigungen erforderlichen Bauelemente. Es kann jedoch auch vorgesehen sein, dass ein Teil beispielsweise der Auswerteelektronik des Beschleunigungssensors 30 nicht innerhalb des Beschleunigungssensors 30, sondern als separates Bauteil auf der Leiterplatte 21 angeordnet ist (nicht dargestellt).

Für den Fall, dass mehrere der Abstandssensoren 10b bis 10e entsprechend dem erfindungsgemäßen Abstandssensor 10, d.h. mit integriertem Beschleunigungssensor 30 ausgebildet sind, ist es vorgesehen, dass zwischen zwei der Abstandsensoren 10b bis 10e ein Abstandsensor 10b bis 10e angeordnet ist, der keinen Beschleunigungssensor 30 aufweist. Weiterhin wird bei der Verwendung von zwei erfindungsgemäßen Abstandsensoren 10 mit integriertem Beschleunigungssensor 30 vorgeschlagen, dass die an linken und rechten Bereich des Stoßfängers 1 in Fahrtrichtung des Kraftfahrzeugs angeordneten Abstandssensoren 10b und 10e als erfindungsgemäße Abstandsensoren 10 mit integriertem Beschleunigungssensor 30 ausgebildet sind.

Der soweit beschriebene erfindungsgemäße Abstandssensor 10 kann in vielfältiger Art und Weise abgewandelt bzw. modifiziert werden, ohne vom Erfindungsgedanken abzuweichen. Dieser besteht darin, einen zur Auslösung eines Airbags erforderlichen Crashsensor (Beschleunigungssensor 30) entweder vorzugsweise innerhalb des Gehäuses 12 des Abstandssensors 10 anzuordnen, oder aber zumindest an dem Gehäuse 12 derart zu befestigen, dass keine zusätzlichen Befestigungselemente erforderlich sind, um den Beschleunigungssensor 30 mit dem Stoßfänger 1 des Kraftfahrzeugs zu verbinden.

## Patentansprüche

1. Abstandssensor (10) für ein Kraftfahrzeug, dessen Gehäuse (12) dazu ausgebildet ist, an einem Stoßfänger (1) des Kraftfahrzeugs befestigt zu werden,
**dadurch gekennzeichnet,**
**dass** das Gehäuse (12) gleichzeitig zur Aufnahme oder Befestigung eines Crash- bzw. Beschleunigungssensors (30) einer Airbageinrichtung ausgebildet ist.

2. Abstandssensor nach Anspruch 1,
**dadurch gekennzeichnet,**
**dass** innerhalb des Gehäuses (12) ein Schaltungsträger (20), insbesondere in Form einer Leiterplatte (21) angeordnet ist, die zumindest mittelbar mit einem Steckeranschluss (14) gekoppelt ist, und dass der Beschleunigungssensor (30) innerhalb des Gehäuses (12) angeordnet und mit dem Schaltungsträger (20) elektrisch verbunden ist.

3. Abstandssensor nach Anspruch 2,
**dadurch gekennzeichnet,**
**dass** der Beschleunigungssensor (30) elektrische Anschlüsse aufweist, die unmittelbar mit auf dem Schaltungsträger (20) angeordneten Gegenkontakten (31 bis 33) verbunden sind, insbesondere durch eine Lötverbindung.

4. Abstandssensor nach Anspruch 4,
**dadurch gekennzeichnet,**
**dass** der Beschleunigungssensor (30) auf der einer Sensormembran (24) abgewandten Seite des Schaltungsträgers (20) angeordnet ist.

5. Anordnung mehrerer Abstandssensoren (10a bis 10f) in einem Stoßfänger (1) eines Kraftfahrzeugs, wobei wenigstens ein Abstandssensor (10b bis 10e) nach einem der Ansprüche 1 bis 4 ausgebildet ist.

6. Anordnung nach Anspruch 5,
**dadurch gekennzeichnet,**
**dass** wenigstens zwei Abstandssensoren (10b bis 10e) nach einem der Ansprüche 1 bis 4 ausgebildet sind, und dass beim Vorhandensein von insgesamt wenigstens drei Abstandssensoren (10b bis 10e) zwischen den wenigstens zwei Abstandssensoren (10b bis 10e), die nach einem der Ansprüche 1 bis 4 ausgebildet sind, wenigstens ein Abstandssensor (10b bis 10e) ohne integriertem Beschleunigungssensor (30) angeordnet ist.

7. Anordnung nach Anspruch 6,
**dadurch gekennzeichnet,**
**dass** jeweils ein Abstandssensor (10b, 10e), der nach einem der Ansprüche 1 bis 4 ausgebildet ist, in einem Randbereich des Stoßfängers (1) angeordnet ist, der in bzw. entgegen der Fahrtrichtung des Fahrzeugs ausgerichtet ist.
